# EUROPÄISCHE PATENTSCHRIFT

(11) **EP 4 680 076 B1**
(45) Veröffentlichungstag und Bekanntmachung des Hinweises auf die Patenterteilung: **11.11.2026**
(21) Anmeldenummer: 24775887.3
(22) Anmeldetag: 19.09.2024
(51) Int. Cl.: A47J 31/02, A47J 31/06, A47J 31/20

(54) **VORRICHTUNG ZUR BEREITUNG EINES EXTRAKTIONSGETRÄNKES**
APPARATUS FOR PREPARING AN EXTRACTION BEVERAGE
APPAREIL DE PRÉPARATION D'UNE BOISSON D'EXTRACTION

(30) Priorität: 28.09.2023 DE 102023126442
(43) Veröffentlichungstag der Anmeldung: 21.01.2026
(73) Patentinhaber: Hermsen, Manfred, 28237 Bremen (DE)
(72) Erfinder: Hermsen, Manfred, 28237 Bremen (DE)
(74) Vertreter: Eisenführ Speiser
(86) Internationale Anmeldenummer: PCT/EP2024/076255
(87) Internationale Veröffentlichungsnummer: WO 2025/068021

(56) Entgegenhaltungen:
- EP-B1- 3 381 335
- US-A- 1 761 354
- US-A- 3 304 852
- US-A- 309 783
- US-A- 444 572
- US-B2- 10 226 147

## Beschreibung

Die vorliegende Erfindung betrifft eine Vorrichtung zur Bereitung eines Extraktions- bzw. Filter-Getränkes, insbesondere eines Kaffee- oder Tee-Getränkes.

Es gibt eine Vielzahl von bekannten Ansätzen zum maschinellen Aufbrühen von beispielsweise Kaffee. Hierzu zählen insbesondere Filterkaffeemaschinen, Siebträgerkaffeemaschinen, Kaffee-Vollautomaten, Espressokannen, Perkolatoren und Portionskaffeemaschinen.

Bei Filterkaffeemaschinen wird erhitztes Wasser auf in einem zumeist als Papierfilter ausgeführten Filter befindliches Kaffeemehl (oder Kaffeepulver) gegeben, wobei das Wasser bei Durchtritt durch das Kaffeemehl als Extraktionsmittel Kaffee-Bestandteile aufnimmt und Feststoffe weitestgehend durch den Filter zurückgehalten werden. Die Wasserzufuhr erfolgt hierbei typischerweise entweder mehr oder weniger kontinuierlich oder schwallweise, wobei die schwallweise Zufuhr des heißen Wassers in einem sogenannten Direktbrühsystem an ein manuelles Überbrühen angenähert ist. Beim manuellen Überbrühen wird das erhitzte Wasser durch eine Bedienperson in den mit Kaffeemehl versehenen Filter gegeben.

Bei Siebträgermaschinen wird erhitztes Wasser mit einem Druck von etwa 9 bar durch das Kaffeemehl auf einem Sieb geführt, wobei ein vergleichbarer Ansatz auch bei Kaffee-Vollautomaten und Portionskaffeemaschinen verfolgt wird.

Bei einer Espressokanne wird in einem unter einem Filter, der das Kaffeemehl trägt, befindlichen Kessel Wasser erhitzt, so dass durch den dabei entstehenden Druck im Kessel das heiße Wasser durch ein zum Kaffeemehl führendes Steigrohr geführt und von dort durch ein weiteres Steigrohr in einen Auffangbehälter geleitet wird.

Auch bei einem Perkolator wird erhitztes Wasser aus einem Kessel durch ein Steigrohr gefördert, wobei hier dieses geförderte Wasser dann auf einem Filter befindliches Kaffeemehl auf getropft wird und dann wieder in den Kessel gelangt.

Neben dem schon erwähnten manuellen Überbrühen werden auch Pressstempelkannen verwendet, wobei hierdurch einen mit einem Sieb versehenen Stempel mit heißem Wasser vermischtes Kaffeemehl im Behälter nach unten gedrückt wird, so dass das Kaffeegetränk oberhalb des Siebes verbleibt.

Eine solche Pressstempelkanne kann auch zur Tee-Zubereitung genutzt werden, wobei bei Tee zur Zubereitung zumeist vorkonfektionierte Tee-Beutel mit einer Portion Tee ein einem Filterbeutel, Tee-Filter oder Tee-Eier verwendet werden. Es gibt auch Zubereitungsvarianten, bei denen der lose Tee in Tasse oder Kanne verbleibt, also keine Filterung erfolgt und sich der lose Tee lediglich absetzt.

Offenbarungen, die sich mit der Extraktion- und/oder Filterung von Getränken bzw. Wasser befassen, finden sich beispielsweise in den Dokumenten CH 243 568 A, DE 548 232 A, DE 22 07 839 A, DE 299 06 743 U1, GB 2 340 027 A, US 503 563 A, US 2 645 173 A, US 5 880 441 A, US 10 264 911 B2, US 10 368 685 B2, US 2004 / 0 154 471 A1, US 2011/0 168 644 A1, WO 2010 / 101 658 A2, US 309 783 A, US 10 226 147 B2, US 3 304 852 A, US 444 572 A und US 1 761 354 A.

Bei bekannten Ansätzen, die eine Filterung mit einem Papierfilter vorsehen, besteht ein Nachteil dahingehend, dass einerseits das resultierende Getränk im Geschmack durch das Papiermaterial beeinflusst werden kann und andererseits der Papierfilter für eine oder allenfalls wenige Anwendungen nutzbar ist, also wenig nachhaltig und ressourcensparend ist. Unabhängig von der Frage der Nachhaltigkeit ist das Vorhalten eines Papierfilters für die Umsetzbarkeit der entsprechenden Ansätze notwendig, d.h. ohne den Filter kann etwa die Kaffeemaschine nicht genutzt werden. Damit ergibt sich die Notwendigkeit, neben dem eigentlichen Verbrauchsmaterial, etwa dem Kaffeemehl, auch noch Papierfilter zu bevorraten.

Vorteilhaft an Papierfiltern ist allerdings deren gute Filterfähigkeit, so dass sich selbst bei einer feinen oder sehr feinen Mahlung etwa des Kaffees (die die Extraktion vereinfacht) noch immer ein weitestgehend klares Getränk bereiten lässt. Neben geschmacklichen und/oder aromatischen Vorteilen eines klaren Getränkes wird mit dem Zurückhalten des Feststoffanteiles (etwa Kaffeesatz) vermieden, dass das Getränk möglichweise für den Konsumenten nicht bekömmlich ist.

Etwa bei der Verwendung einer Pressstempelkanne oder eines "Dauerfilters" aus Metall (typischerweise Edelstahl) und/oder Kunststoff wird kein Papierfilter benötigt. Konzeptionsbedingt lässt sich allerdings bei diesen bekannten Lösungen keine Feinporigkeit erreichen, die mit der eines Papierfilters vergleichbar ist. Eine für die Zubereitung eines (mehr oder weniger) klaren Getränkes ausreichend feines Sieb oder ein entsprechend feiner Filter setzt sich bei einer Pressstempelkanne schnell zu, verstopft also, so dass ohne Druckbeaufschlagung der Wasserdurchtritt verhindert wird. Selbst wenn man ein gröberes Mahlen (und damit verbundene Nachteile bei der Extraktion selbst) in Kauf nimmt, lässt sich auch dabei nicht vermeiden, dass im gemahlenen Gut ein "Unterkorn" auftritt, das ggf. dann noch immer mit durch den Filter tritt.

Eine aus DE 10 2017 002 943 A1 bekannte Vorrichtung für die Zubereitung eines Filterkaffee-Getränkes besteht aus einem Filtertopf und einem Kaffeebehälter. In der Ausgangsstellung befindet sich der entsprechend bemessene Filtertopf innerhalb des Kaffeebehälters unter Abstützung auf dessen Bodenwand. In dieser Stellung wird siedendes Wasser in den Filtertopf gegossen und danach gemahlener Röstkaffee zugeführt und durch Rühren oder Schwenken der Vorrichtung mit dem Wasser vermischt. Danach wird der Filtertopf in eine obere Filtrierstellung bewegt, in der das Kaffeegetränk durch ein Filtersieb am Boden des Filtertopfes in den Kaffeebehälter gelangt.

Bei der aus DE 10 2017 002 943 A1 bekannten Vorrichtung ist eine relativ komplexe Handhabung notwendig, bei der der Filtertopf beinahe vollständig aus dem Kaffeebehälter herausgehoben werden muss, gefolgt von einer Verankerung in einer Filtrierstellung durch ein relatives Verdrehen von Filtertopf und Kaffeebehälter unter Nutzung einer Zusammenwirkung von Zapfen und Nuten.

Ein der vorliegenden Erfindung zugrundeliegendes Ziel ist es, die Nachteile und/oder Beschränkungen, der aus dem Stand der Technik bekannten Lösungen zu vermeiden oder zumindest zu mindern, wobei auch das Ziel erreicht wird, ein klares Extraktionsgetränk zu bereiten.

Es ist daher gewünscht, eine Lösung vorzustellen, die in nachhaltiger Weise, ohne übermäßigen Technik-Einsatz und mit dennoch praktikabler Handhabbarkeit erlaubt, beispielsweise ein weitestgehend klares Kaffee-Getränk zu bereiten, das einen guten Geschmack und eine gute Bekömmlichkeit besitzen kann.

Erfindungsgemäß wird nach einem ersten Aspekt eine Vorrichtung zur Bereitung eines Extraktionsgetränkes, insbesondere eines Kaffee-Getränkes, vorgeschlagen, wie sie in Anspruch 1 definiert ist, nämlich mit einem Filtertopf zur Aufnahme von festem Extraktionsgut, insbesondere Kaffeemehl, und flüssigem Extraktionsmittel, insbesondere Wasser, und einem Extrakt-Behälter, wobei der Filtertopf in einem unteren Bereich ein Filtersieb aufweist, das dazu ausgestaltet ist, Extraktionsgetränk passieren zu lassen und einen nicht vom Extraktionsgetränk aufgenommenen Feststoffanteil des Extraktionsgutes im Filtertopf zurückzuhalten, wobei der Filtertopf zumindest teilweise in einem Innenraum des Extrakt-Behälters angeordnet ist und relativ zum Extrakt-Behälter eine erste und eine zweite Position annehmen kann, wobei die Vorrichtung ferner eine Dichtung aufweist, die, wenn sich der Filtertopf in der ersten Position befindet, den Filtertopf und einen vorbestimmten ersten Anteil des Innenbereiches des Extrakt-Behälters einerseits und einen verbleibenden zweiten Anteil des Innenbereiches des Extrakt-Behälters andererseits gegeneinander abdichtet, wobei sich die zweite Position oberhalb der ersten Position befindet, derart dass die Dichtwirkung der Dichtung aufgehoben und ein Passieren des Extraktionsgetränkes aus dem Filtertopf in den Extrakt-Behälter durch das Filtersieb hindurch erlaubt ist, wobei die Vorrichtung ferner eine außerhalb des Extrakt-Behälters befindliche Führung für eine Bewegung des Filtertopfes zwischen der ersten und der zweiten Position aufweist, wobei der Extrakt-Behälter eine Ausgießtülle aufweist, die ein Ausgießen von Extraktionsgetränk aus dem Extrakt-Behälter unter Zurückhalten des nicht vom Extraktionsgetränk aufgenommenen Feststoffanteiles des Extraktionsgutes im Filtertopf erlaubt.

Während bei der aus DE 10 2017 002 943 A1 bekannten Vorrichtung zwar eine gewisse Führung für den Filtertopf durch die Öffnung des Kaffeebehälters gegeben ist, in der der Filtertopf vorgesehen ist, muss dort der Benutzer die Bewegung des Filtertopfes mit dem Griff des Filtertopfes selbst kontrollieren, wobei es zudem ratsam ist, auch den Kaffeebehälter mit dessen Griff zu halten, so dass hier eine Zweihandbenutzung wenn auch möglicherweise nicht nötig, aber dennoch praktisch nicht zu umgehen ist. Selbst wenn das Anheben des Filtertopfes aus dem Kaffee-Behälter noch mit einer Hand machbar sein mag, müssen zum Fixieren in der Fixierstellung Kaffee-Behälter und Filtertopf gegeneinander verdreht werden, so dass hierzu beide Hände gebraucht werden.

Damit, dass erfindungsgemäß eine Führung außerhalb des Extrakt-Behälters vorgesehen ist, wird die Handhabbarkeit vereinfacht, insbesondere dahingehend, dass es nicht mehr dem Benutzer obliegt, eine korrekte Kontrolle der Bewegung zum Erreichen einer Position zum Filtern des Extraktionsgetränkes durchzuführen.

Die erfindungsgemäße Vorrichtung erlaubt allerdings hinsichtlich der Bereitung des Extraktionsgetränkes selbst die Vorteile, die aus DE 10 2017 002 943 A1 bekannt sind. Wird das Kaffeemehl als Beispiel eines Extraktionsgutes in das bereits im Filtertopf vorgesehene heiße Wasser (als Beispiel eines flüssigen Extraktionsmittels) gegeben, kann die Extraktion etwa durch Rühren oder Verschwenken unterstützt werden, wobei das Maß der Aufnahme von Geschmacksstoffen durch die Dauer bestimmt werden kann, bis zu der das Gemenge von Wasser und Kaffeemehl im Filtertopf verbleibt. Mit dem Abdichten der Dichtung von Filtertopf und dem ersten Anteil des Innenbereiches des Extrakt-Behälters einerseits und dem verbleibenden zweiten Teil des Innenbereiches andererseits wird ein Durchtreten von Extraktionsmittel bzw. Extraktionsgetränk aus dem Filtertopf bzw. dem ersten Anteil des Innenbereiches in den zweiten Anteil des Innenbereiches unterbunden.

Bei der Wahl des Materials für die Dichtung ist zu berücksichtigen, dass die Dichtung (wie letztlich Filtertopf und Extrakt-Behälter insgesamt) etwa bei der Kaffee-Bereitung Wasser (als Extraktionsmittel) mit einer Temperatur nahe von 100°C in Kontakt kommt, also eine ausreichende Temperaturbeständigkeit unter Beibehaltung der Dichtungseigenschaften besitzen sollte. Hierzu kann Kautschuk, beispielsweise der Synthese-Kautschuk EPDM oder ein Silikonmaterial eingesetzt werden.

Für den Filtertopf und den Extrakt-Behälter ist ebenfalls auf eine ausreichende Temperaturbeständigkeit zu achten, wobei zum Bereiten von Tee oder Kaffee als Materialien insbesondere etwa Metall (insbesondere Edelstahl), Glas und Keramik in Frage kommen, allerdings auch ausreichend temperaturstabile Kunststoffe wie Polycarbonat.

Bei Verwendung einer Filtertüte oder bei druckbeaufschlagtem Durchführen von Wasser durch das Kaffeemehl ergibt sich eine relativ kurze Verweildauer, bei der das Wasser Geschmacksstoffe aus dem Kaffeemehl extrahieren kann. Um diese Verweildauer gut auszunutzen, wird das Kaffeemehl vergleichsweise fein gemahlen, um so die zur Verfügung stehende Oberfläche zu vergrößern. Bei einer Pressstempelkanne kann zwar die Verweildauer von Wasser und Kaffeemehl mehr oder weniger frei gewählt werden, dort ist allerdings angesichts der grundsätzlich gröberen Filterung auch ein gröberes Kaffeemehl notwendig.

Das Filtersieb der erfindungsgemäßen Vorrichtung besitzt vorteilhafterweise eine Porengröße im Bereich von 5 bis 100 µm, bevorzugt im Bereich von 20 bis 50 µm. Je kleiner die Porengröße ist, desto klarer ist das bereitete Extraktionsgetränk, wobei mit kleineren Poren allerdings auch ein langsamerer Durchtritt durch das Filtersieb und ein höheres Risiko eines Verstopfens des Filtersiebes durch das Extraktionsgut gegeben ist. Im Vergleich etwa zu einer Pressstempelkanne ergibt sich allerdings ein geringeres Risiko des Verstopfens. Das Extraktionsgut und das Extraktionsmittel bilden eine Suspension, wobei feinere Partikel des Extraktionsgutes hierbei tendenziell zunächst im Bereich der Oberfläche der Suspension verbleiben. Damit gelangen die feineren Partikel erst mit dem Filtervorgang, insbesondere zu dessen Ende, selbst zum Filtersieb.

Es ist bevorzugt, das Filtersieb aus Edelstahl zu erstellen, wobei dies beispielweise per Perforation und/oder gewebeähnlich ausgestaltet sein kann. Es ist hierbei ferner bevorzugt, wenn das Filtersieb austauschbar am oder im Filtertopf angebracht ist.

Vorzugsweise erlaubt die Ausgießtülle bzw. die Vorrichtung als Ganzes ein Ausgießen des Extraktionsgetränkes unabhängig von der Position des Filtertopfes, also nicht nur wenn sich der Filtertopf in der zweiten Position befindet. Wird, was eigentlich nicht vorgesehen ist, der Filtertopf an die erste Position (zurückgebracht), während sich noch Extraktionsgetränk im Extrakt-Behälter befindet, kann dies zur Folge haben, dass infolge der Abdichtung durch die Dichtung dann im Inneren des Filtertopfes befindliches Extraktionsgetränk nicht mehr in den zweiten Bereich des Extrakt-Behälters gelangen kann, so dass es dann auch solange nicht durch die Ausgießtülle ausgegossen werden kann, wie sich der Filtertopf in der ersten Position befindet.

In einer vorteilhaften Ausgestaltung eines Aspektes der Erfindung befindet sich der Filtertopf in der zweiten Position oberhalb eines Füllhöheniveaus, das sich ergibt, wenn der Extrakt-Behälter mit Flüssigkeit von einem Volumen gefüllt ist, das einem Innenvolumen des Filtertopfes entspricht.

Das Innenvolumen des Filtertopfes bestimmt, angesichts der Abdichtung in der ersten Position, die Menge an flüssigem Extraktionsmittel (z.B. heißem Wasser), das insgesamt für die Extraktion genutzt wird. Wird der Filtertopf lediglich zu einer Höhe innerhalb des Extrakt-Behälters geführt, die sich noch im Bereich des dann im Extrakt-Behälters befindlichen Extraktionsgetränkes befindet, werden dem im Filtertopf befindlichen Extraktionsgut weiterhin Geschmacksstoffe extrahiert, wobei bei längerer Extraktion unerwünschte Bitterstoffe und dergleichen vermehrt ins Extraktionsgetränk übergehen. Wird der Filtertopf vollständig aus dem mit Extraktionsmittel gefüllten Bereich des Extrakt-Behälters entfernt, wird dies vermieden.

Eine größere Entfernung der zweiten Position von der ersten Position als die oben beschriebene bietet keinen weiteren Vorteil, da in der oben beschriebenen Konstellation der Filtertopf sicher von dem Extraktionsgetränk im Extrakt-Behälter getrennt ist.

Auch wenn der Filtertopf lediglich zu einer Höhe innerhalb des Extrakt-Behälters geführt wird, die sich noch im Bereich des dann im Extrakt-Behälters befindlichen Extraktionsgetränkes befindet, wenn sich also in einer anderen Ausgestaltung die zweite Position nicht oberhalb des oben genannten Füllhöhenniveaus befindet, kann ein überlanges "Stehen" des Filtertopfes im Extraktionsgetränk im Extrakt-Behälter auch damit vermieden werden, dass bereits vor vollständigen Passieren des Extraktionsgetränkes Extraktionsgetränk aus dem Extrakt-Behälter (durch die Ausgießtülle) ausgegossen wird.

In einer anderen vorteilhaften Ausgestaltung bzw. einer bevorzugten Variante der obigen Ausgestaltung weist der Extrakt-Behälter ein gegenüber dem Filtertopf um einen Faktor von 1,4 größeres Innenvolumen auf.

Wenn der Extrakt-Behälter ein wesentlich größeres Innenvolumen als der Filtertopf besitzt, verringert sich damit entsprechend die Höhe, bis zu der der Filtertopf angehoben werden muss, um aus dem Bereich des Extraktionsgetränkes im Extrakt-Behälter zu gelangen. Damit kann einerseits die Bauhöhe der Vorrichtung kompakter gehalten werden, wobei andererseits mit der verringerten Distanz zwischen erster und zweiter Position auf eine Vereinfachung der Handhabung einhergeht. Bei einer beispielhaften Realisierung der Vorrichtung besitzt der Filtertopf ein Innenvolumen von etwa 1,5 I, während der Extrakt-Behälter ein Innenvolumen von etwa 2,2 I besitzt, womit sich ein Faktor von ca. 1,47 ergibt.

Die obige Variante kann vorteilhafterweise so ausgeführt sein, dass sich der Innenbereich des Extrakt-Behälters nach unten aufweitet.

Mit einer beispielsweise kegelstumpf-artigen Aufweitung des Innenbereiches des Extrakt-Behälter lässt sich ausgehend von einer Passung des Filtertopfes in einer Öffnung des Extrakt-Behälters in einfacher Weise ein im Vergleich größeres Innenvolumen erreichen. Andere Möglichkeiten sind ebenfalls möglich, etwa in Form einer bauchigen Form.

In einer anderen vorteilhaften Ausgestaltung eines Aspektes der Erfindung stützt sich der Filtertopf in der ersten Position über die Dichtung am Boden des Extrakt-Behälters ab.

Eine Möglichkeit, eine Abdichtung vorzusehen, die das Extraktionsmittel bis zur Zugabe von Extraktionsgut und auch noch für eine gewünschte Zeitdauer im Anschluss im Filtertopf hält, besteht darin, dass die Dichtung zwischen dem Filtertopf und dem Boden des Extrakt-Behälters vorgesehen ist.

Hierbei kann sich die Dichtung um den Bereich des Filtersiebes herum erstrecken, das sich dann vorzugweise ausschließlich am Boden des Filtertopfes befindet, so dass der vorbestimmte erste Anteil des Innenbereiches des Extrakt-Behälters als der Bereich bestimmt, der durch den Boden des Extrakt-Behälter nach unten, durch den Filtertopf nach oben und durch die umlaufende Dichtung nach außen begrenzt wird.

In einer anderen vorteilhaften Ausgestaltung eines Aspektes der Erfindung ist die Führung für eine Arretierung des Filtertopfes in der ersten und/oder in der zweiten Position ausgestaltet.

Auch wenn die erste Position allein durch das Gewicht des Filtertopfes (und der damit verbundenen Elemente) schon gehalten werden kann (etwa so, dass ausreichend Kraft auf die Dichtung aufgebracht ist), erleichtert eine Arretierung die Handhabung für den Nutzer, der mit dem in der ersten Position arretiertem Filtertopf die Vorrichtung bewegen kann, ohne darauf achten zu müssen, dass der Filtertopf ungewollt aus der ersten Position wegbewegt wird. Mit der Arretierung in der ersten Position kann überdies auch verbunden sein, dass damit eine Kraft auf die Dichtung ausgeübt wird, insbesondere in einem Fall (siehe oben), bei dem sich der Filtertopf über die Dichtung auf dem Boden des Extrakt-Behälters abstützt. Ebenso ist es möglich, dass bei einem in der zweiten Position vom Benutzer gehaltenen Filtertopf das Extraktionsgetränk bereits vollständig aus dem Extrakt-Behälter ausgegossen wird, so dass danach keine Notwendigkeit besteht, den Filtertopf weiterhin in der zweiten Position zu halten. Im Allgemeinen erleichtert allerdings auch eine Arretierung in der zweiten Position die Benutzung, da dann der Filtertopf nicht mehr vom Nutzer selbst gehalten werden muss.

Bei der aus DE 10 2017 002 943 A1 bekannten Vorrichtung wird ein Fixieren von Filtertopf und Extrakt-Behälter (dort Sammelbehälter oder Kaffeebehälter genannt) durch eine Drehbewegung dieser Elemente relativ zueinander erreicht, wobei dies in der ersten Position, also bei belasteter Dichtung, mit einer nachteiligen Belastung bzw. Abnutzung der Dichtung verbunden ist. Die vorliegende Erfindung vermeidet diesen Nachteil.

In einer anderen vorteilhaften Ausgestaltung eines Aspektes der Erfindung erstreckt sich die Führung neben dem Extrakt-Behälter, wobei die Führung insbesondere ausgestaltet ist, um als Griff für die Vorrichtung zu dienen.

Es wurde gefunden, dass die Führung, soweit sie sich neben dem Extrakt-Behälter erstreckt, in vorteilhafter Weise als Griff zum Halten und Tragen der Vorrichtung genutzt werden kann.

In einer anderen vorteilhaften Ausgestaltung eines Aspektes der Erfindung umfasst die Führung eine Hülse und einen innerhalb der Hülse aufgenommenen Dorn. In einer bevorzugten Variante dieser Ausgestaltung kann die Hülse relativ zum Dorn um eine Längsachse gedreht werden.

Die außenliegende Hülse kann vorteilhaft vom Benutzer gegriffen werden, wobei insbesondere die Möglichkeit der Drehung eine Bedienung mit nur einer Hand erlaubt. Der Dorn dient hierbei dem Zusammenwirken mit der Hülse, wobei es nicht notwendig ist, dass der Dorn massiv ausgeführt ist. So kann der Dorn beispielsweise auch in Form eines Rohres mit ausreichend dicker Wandung ausgeführt sein, so dass die Wandung (und damit der Dorn) eine ausreichende Stabilität besitzt (insbesondere auch dann noch, wenn der Dorn mit einer Nut versehen ist, wie weiter unten diskutiert).

Die obige Variante kann vorteilhafterweise so ausgeführt sein, dass der Dorn wenigstens eine Nut aufweist, in die ein Zapfen innerhalb der Hülse eingreift, und/oder der Dorn wenigstens einen Zapfen aufweist, der in eine Nut oder einen Schlitz in der Hülse eingreift.

Mit Nut und Zapfen kann eine geführte, relative Orientierung von Dorn und Hülse erreicht werden, die auch dazu verwendet werden kann, eine Sperrung gegen einer Längsbewegung von Dorn und Hülse relativ zueinander bei entsprechend ausgeführten Nut und entsprechender Verdrehung zu erreichen.

Bei der vorteilhaften Ausführung der obigen Variante kann vorzugsweise vorgesehen sein, dass die Nut bzw. der Schlitz mit einem sich vorzugweise verjüngenden Verriegelungsschenkel zur Verriegelung des Filtertopfes in einer Position ausgeführt ist, wobei der Verriegelungsschenkel insbesondere für eine Verriegelung in der ersten Position mit einer Steigung versehen ist.

Der Vorteil der Steigung im Verriegelungsschenkel besteht darin, dass mit einer relativ geringen Kraft zur Bewegung des Zapfens entlang dieser Steigung eine verhältnismäßig größere Kraft in Längsrichtung (etwa zur Erhöhung der Dichtwirkung) aufgebracht werden kann, wobei zudem hierbei die Reibung im Schenkel eine gewisse Sicherung gegen ein ungewolltes Lösen mit sich bringt. Die Steigung muss nicht im gesamten Bereich des Verriegelungsschenkels vorgesehen sein. So kann der Verriegelungsschenkel beispielsweise in einem ersten Bereich die Steigung aufweisen, gefolgt von einem im Wesentlichen horizontal verlaufenden Abschnitt.

Das bevorzugte, aber nicht notwendige Sich-Verjüngen des bzw. der Verriegelungsschenkel kann eine gewisse Sicherung gegen ein ungewolltes Bewegen des Zapfens innerhalb des Verriegelungsschenkels leisten. Der Zapfen wird durch eine Reibungskraft im verjüngten Bereich der Nut bzw. des Schlitzes gehalten, so dass etwa bei einem Schwenken der Vorrichtung als Ganzes zur Unterstützung der Extraktion oder der Reinigung des Filtertopfes die Arretierung nicht ungewollt gelöst wird.

Alternativ oder ergänzend zu dem Sich-Verjüngen können auch andere Maßnahmen vorgesehen werden, um ein ungewolltes Lösen zu erschweren oder zu verhindern. So kann die Nut bzw. der Schlitz eine Verengung aufweisen, die eine gewisse Sperrwirkung aufweisen kann. Diese Verengung kann zwischen den Wandungen des Schlitzes oder der Nut vorgesehen sein, im Fall einer Nut kann die Verengung allerdings auch eine Verringerung der Tiefe der Nut umfassen. Die Verengung kann dadurch gebildet sein, dass die Nut bzw. der Schlitz selbst bereits damit ausgeführt ist, während es auch möglich ist, die Verengung dadurch zu erreichen, dass Material (vorzugsweise ein elastisches und abriebfestes Material) an einer geeigneten Stelle eingefügt wird.

Die hier diskutierte Ausgestaltung bzw. deren Varianten können vorteilhafterweise so ausgeführt sein, dass die Hülse einen vorzugsweise federbelasteten Stift und der Dorn wenigstens eine Stiftaufnahme zur Arretierung aufweisen.

Das Vorsehen von (federbelastetem) Stift und Stiftaufnahme erlaubt, den Filtertopf in der ersten und/oder zweiten Position zu fixieren.

In einer anderen vorteilhaften Ausgestaltung eines Aspektes der Erfindung ist die Dichtung an einer Wandung des Filtertopfes gehalten und trägt das Filtersieb.

Das Halten der Dichtung an einer Wandung kann etwa per Kraftschluss (beispielsweise Reibschluss) und/oder Formschluss in vorteilhafterweise lösbar ausgeführt sein, so dass die Dichtung vom restlichen Filtertopf abgenommen werden kann, um so einen Austausch der Dichtung zu erlauben. Ein Stoffschluss (z.B. Verkleben) ist zwar ebenfalls möglich, erlaubt allerdings nicht ohne weiteres einen so einfachen Austausch.

Im Beispiel eines im Wesentlichen zylinderförmigen Filtertopfes kann die Dichtung auf der Innenseite und/oder auf der Innenseite der Zylinderwandung anliegen, wobei mit einer entsprechenden Passung von Wandung und Dichtung für den Halt der Dichtung an der Wandung gesorgt werden kann. Beispielsweise kann die Dichtung hierbei einen im Wesentlichen ringförmigen Abschnitt aufweisen, der sich in ausreichender Länge in Längsrichtung des Filtertopfs (also quer zur Fläche des Filtersiebes, das einen durchlässigen Boden des Filtertopfes bildet) erstreckt und etwa an der Innenwandung des Filtertopfes anliegt.

Hierbei wird das Filtersieb von der Dichtung getragen, beispielsweise dadurch, dass die Dichtung als Formprofil ausgeführt ist, das eine Aufnahme umfasst, durch die hindurch sich das Filtersieb in das Profil hinein erstreckt, um dort gehalten zu werden. Hierbei kann das Filtersieb mit einem umlaufenden Kragen oder zumindest mit Kragenabschnitten versehen sein, die sich innerhalb des Profils befinden, um zu verhindern, dass sich das Filtersieb etwa durch Verschieben ungewollt aus dem Dichtungsprofil löst.

Es ist ebenfalls möglich, dass das Tragen des Filtersiebes durch die Dichtung damit erreicht wird, dass das Filtersieb zwischen der Dichtung und der Wandung gehalten wird.

Die Dichtung und das Filtersieb können in einer Weise miteinander verbunden sein, die ein Trennen voneinander erlaubt. Hierbei ist es beispielsweise möglich, ein beschädigtes Filtersieb von der Dichtung zu lösen und ein neues Filtersieb einzusetzen, wobei die Dichtung weiterverwendet werden kann. Ebenso kann eine nicht mehr funktionale Dichtung durch eine neue ausgetauscht werden, während ein noch intaktes Filtersieb weiterverwendet wird.

Es ist allerdings auch möglich, die Dichtung und das Filtersieb in integraler Weise vorzusehen, beispielsweise mit einem Spritzgussverfahren, bei dem das Filtersieb mit in die Form eingelegt wird.

Während die hier diskutierte Ausgestaltung das Halten der Dichtung an der Wandung des Filtertopfes und das Tragen des Filtersiebes durch die Dichtung gemeinsam vorsieht, können diese Aspekte im Rahmen der Erfindung auch unabhängig voneinander vorgesehen sein.

Die Dichtung weist hierbei vorzugweise eine schräg nach innen/unten gerichtete Dichtlippe auf, so dass der Flüssigkeitsdruck von Flüssigkeit im Inneren des Filtertopfs bei auf dem Boden des Extrakt-Behälters aufliegender Dichtlippe diese auf den Boden drückt.

In einer anderen vorteilhaften Ausgestaltung eines Aspektes der Erfindung weisen der Filtertopf eine Außenkontur und der Extrakt-Behälter eine Öffnung auf, durch die sich der Filtertopf erstreckt, wobei die Außenkontur und die Öffnung aufeinander abgestimmt sind, so dass sie gemeinsam eine weitere Führung bilden.

Auch wenn eine solche weitere Führung nicht notwendig ist, also der Filtertopf im oberen Bereich etwa vollständig mit einem Abstand von einer Wandung des Extrakt-Behälters vorgesehen sein kann, wirkt sich die Führung von Filtertopf an der Öffnung des Extrakt-Behälters vorteilhaft auf die Gesamtstabilität der Vorrichtung aus.

Die erfindungsgemäße Vorrichtung kann insbesondere durch ein Einbringen von Reinigungsflüssigkeit, insbesondere Wasser, durch die Ausgießtülle in den Extrakt-Behälter, insbesondere nach vollständigem Ausgießen des Extraktionsgetränkes, ein Rückspülen des Filtersiebes mit der Reinigungsflüssigkeit, wobei noch nicht aus dem Filtertopf entfernter Feststoffanteil des Extraktionsgutes aufgeschwemmt wird, und ein Ausbringen der Reinigungsflüssigkeit mit darin befindlichem Feststoffanteil aus dem Filtertopf durch eine Öffnung des Filtertopfes gereinigt werden.

Die Reinigung des Filtertopfes bzw. des Filtersiebes erfolgt gewissermaßen in zum Filtern umgekehrter Richtung, wodurch die Vorrichtung wiederum in einen Zustand gebracht wird, bei dem sich der Filtertopf in der ersten Position befindet, also für eine weitere Bereitung von Extraktionsgetränk bereit ist. Für ein einfaches Einbringen der Reinigungsflüssigkeit ist es von Vorteil, wenn die Tülle eine große Öffnung bzw. ein großes Freivolumen aufweist, wobei dies wiederum auch mit Blick auf das gegenüber dem Filtertopf vergrößerte Innenvolumen des Extrakt-Behälter vorteilhaft ist.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus den obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: eine schematische Darstellung zur Illustration eines ersten Ausführungsbeispieles einer erfindungsgemäßen Vorrichtung zur Bereitung eines Extraktionsgetränkes in einer ersten Ansicht,
- Fig. 2: eine schematische Darstellung zur Illustration des ersten Ausführungsbeispieles der erfindungsgemäßen Vorrichtung zur Bereitung eines Extraktionsgetränkes in einer zweiten Ansicht,
- Fig. 3: eine schematische Darstellung zur Illustration des ersten Ausführungsbeispieles der erfindungsgemäßen Vorrichtung zur Bereitung eines Extraktionsgetränkes in einer dritten Ansicht,
- Fig. 4: eine schematische Darstellung zur Illustration des ersten Ausführungsbeispieles der erfindungsgemäßen Vorrichtung zur Bereitung eines Extraktionsgetränkes in einer vierten Ansicht,
- Fig. 5: eine schematische Darstellung zur Illustration des ersten Ausführungsbeispieles der erfindungsgemäßen Vorrichtung zur Bereitung eines Extraktionsgetränkes in einer fünften Ansicht,
- Fig. 6: schematische Ansichten des Verlaufes einer Nut an einem Dorn nach einem Ausführungsbeispiel der erfindungsgemäßen Vorrichtung,
- Fig. 7: eine schematische Detailansicht eines Aspektes des ersten Ausführungsbeispieles der erfindungsgemäßen Vorrichtung,
- Fig. 8: eine weitere schematische Detailansicht des Aspektes aus Fig. 7, und
- Fig. 9: eine weitere schematische Detailansicht des Aspektes aus Fig. 7 und 8.

In den beiliegenden Zeichnungen sowie den Erläuterungen zu diesen Zeichnungen sind einander entsprechende bzw. in Beziehung stehende Elemente - soweit zweckdienlich - mit jeweils entsprechenden oder ähnlichen Bezugszeichen gekennzeichnet, auch wenn sie in unterschiedlichen Ausführungsbeispielen zu finden sind.

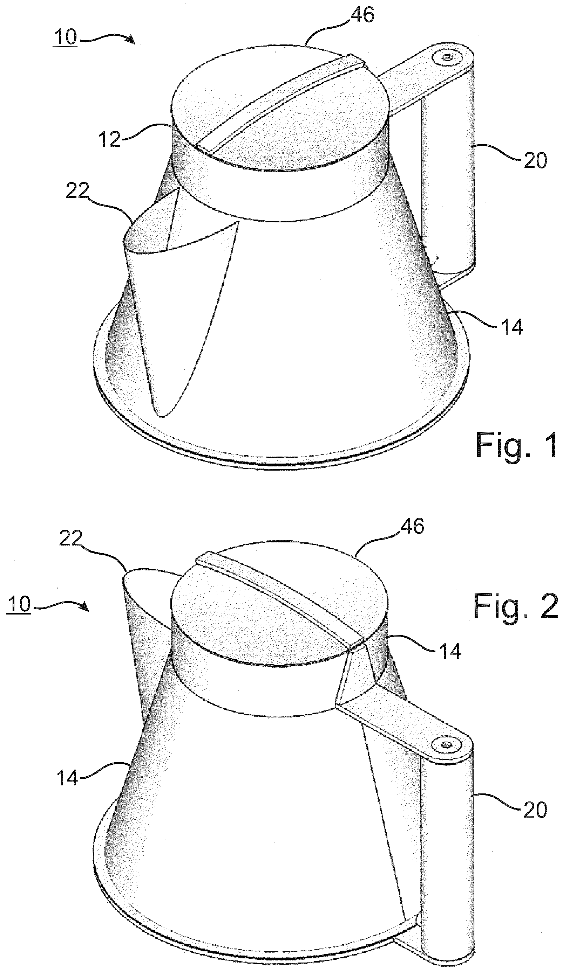

Fig. 1 und Fig. 2 zeigen schematische Darstellungen zur Illustration eines ersten Ausführungsbeispieles einer erfindungsgemäßen Vorrichtung 10 zur Bereitung eines Extraktionsgetränkes in einer ersten und einer zweiten Ansicht.

Die Vorrichtung 10 umfasst einen Extrakt-Behälter 14 und einen teilweise innerhalb des Extrakt-Behälters 14 angeordneten Filtertopf 12. Der Filtertopf 12 ist mit einem Deckel 46 versehen, der eine Öffnung 44 des Filtertopfes 12 verschließt. Der Extrakt-Behälter 14 weist eine Ausgießtülle 22 auf, wobei vorliegend eine Öffnung von Innenbereich des Extrakt-Behälters 14 in den Bereich der Ausgießtülle 22 verdeckt ist. Diese Öffnung kann sich allerdings auch bis an die Oberkante der Ausgießtülle 22 erstrecken. Der Filtertopf 12 und der Extrakt-Behälter 14 sind über einen als Führung 20 ausgestalteten Griff 20 miteinander verbunden, der der Ausgießtülle 22 gegenüberliegt.

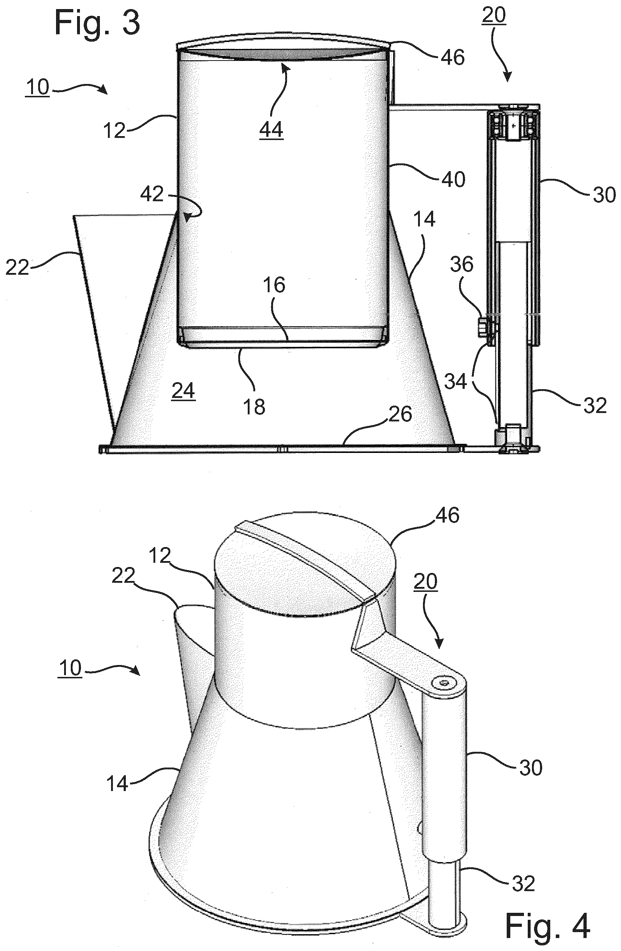

Fig. 3 zeigt eine schematische Darstellung zur Illustration des ersten Ausführungsbeispieles der erfindungsgemäßen Vorrichtung zur Bereitung eines Extraktionsgetränkes in einer dritten Ansicht, die eine teilweise Schnitt-Darstellung ist.

Wie schon in Fig. 1 und 2 angedeutet, befindet sich der Filtertopf 12 teilweise in einem Innenbereich 24 des Extrakt-Behälters 14, wobei der Filtertopf 12 an dessen Boden mit einem Filtersieb 16 ausgestattet ist.

Das Filtersieb 16 ist hier von einer ringförmig ausgestalteten Dichtung 18 gehalten, die ein Profil dahingehend aufweist, dass ein Abschnitt der Dichtung 18 an einer Innenseite einer umlaufenden Wandung des Filtertopfs 12 anliegt (und dort abdichtet), wobei ferner einer schräg nach innen/unten verlaufende Lippe vorhanden ist. Durch eine entsprechende Ausgestaltung des Profils ist das Filtersieb 16 durch diese Dichtung 18 halten, wobei die Einheit aus Dichtung 18 und Filtersieb 16 nach unten aus dem Filtertopf 12 herausgezogen werden kann, um eine andere entsprechende Einheit einzuführen, etwa zum Austausch im Fall einer Beschädigung von Filtersieb 16 oder Dichtung 18.

Der Innenbereich 24 des Extrakt-Behälters ist mit der Ausgießtülle 22 verbunden. In der Darstellung von Fig. 3 befindet sich der Filtertopf 12 in einer zweiten Position, bei der sich das Filtersieb 16 in einem Abstand von einem Boden 26 des Extrakt-Behälters 14 befindet. Im Gegensatz dazu befindet sich der Filtertopf 12 in den Darstellungen der Fig. 1 und 2 in einer ersten Position, bei der der Filtertopf 12 mit einer das Filtersieb 16 umgebenden Dichtung (nicht dargestellt) auf dem Boden 26 des Extrakt-Behälters 14 aufsitzt, so dass im Filtertopf 12 befindliche Flüssigkeit zurückgehalten wird. In der in Fig. 3 gezeigten Position ist diese Dichtwirkung aufgehoben, so dass durch das Filtersieb 16 hindurch Flüssigkeit aus dem Filtertopf 14 in den Innenbereich 24 des Extrakt-Behälters 14 gelangen kann. Die Öffnung 44 am oberen Ende des Filtertopfes 14 ist mit dem Deckel 46 verschlossen.

In der Darstellung von Fig. 3 ist ferner zu erkennen, dass der Griff bzw. die Führung 20 eine Hülse 30 und einen sich innerhalb der Hülse 30 erstreckenden Dorn aufweist. Vorliegend ist der Dorn 32 fest mit dem Extrakt-Behälter 14 verbunden, während die Hülse 30 über ein Lager mit dem Filtertopf 12 verbunden ist, so dass die Hülse 30 an sich um ihre Längsachse drehbar vorgesehen ist. Die Anordnung von Hülse 30 und Dorn 32 bezüglich Filtertopf 12 und Extrakt-Behälter 14 kann allerdings auch eine andere sein.

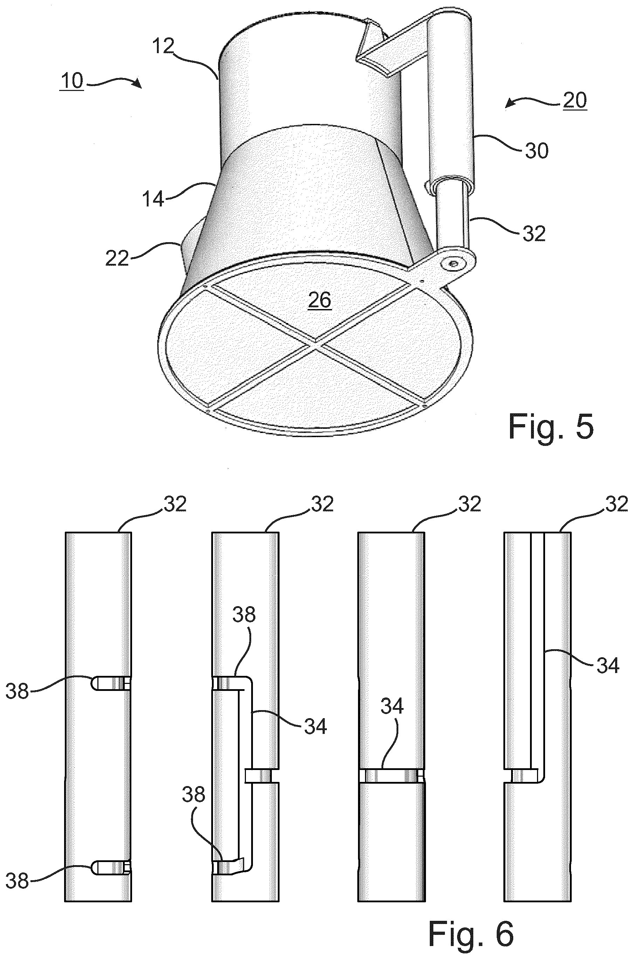

Die Hülse 30 weist einen Zapfen 36 auf, der in einer im Dorn 32 vorgesehenen Nut 34 geführt wird (siehe auch Fig. 6).

Der Filtertopf 12 besitzt eine Außenkontur 40, die zusammen mit einer entsprechenden Öffnung 42 des Extrakt-Behälters 14 eine zusätzliche Führung für den Filtertopf 12 im Extrakt-Behälter 14 leistet.

Fig. 4 und Fig. 5 zeigen schematische Darstellungen zur Illustration des ersten Ausführungsbeispieles der erfindungsgemäßen Vorrichtung zur Bereitung eines Extraktionsgetränkes in einer vierten und einer fünften Ansicht.

Die Ansicht von Fig. 4 entspricht in der Perspektive der von Fig. 2, wobei im Gegensatz zu Fig. 2 Fig. 4 die Vorrichtung 10 mit vom Boden 26 des Extrakt-Behälters abgehobenen Filtertopf 12 zeigt.

Fig. 5 zeigt die Vorrichtung 10 von schräg unten, wobei eine Querverstrebung zur Stabilisierung des Bodens 26 des Extrakt-Behälters 14 zu erkennen ist.

Fig. 6 zeigt schematische Ansichten des Verlaufes einer Nut 34 an einem Dorn 32 nach einem Ausführungsbeispiel der erfindungsgemäßen Vorrichtung.

Die Ansichten zeigen den Dorn 32 bzw. den Verlauf der Nut 34 jeweils aus um 90° gegeneinander versetzten Ansichten. Der Verlauf der Nut 34 umfasst zwei Verriegelungsschenkel 38, wobei der untere Verriegelungsschenkel 38 mit einer Steigung versehen ist, die dazu dient, den Filtertopf an dessen erster Position auf den Boden des Extrakt-Behälters zu drücken.

Durch ein Drehen (im vorliegenden Fall aus Sicht von oben gegen den Uhrzeigersinn) kann ein im jeweiligen Verriegelungsschenkel 38 befindlicher Zapfen (nicht dargestellt) in den Bereich eines senkrecht verlaufenden Abschnittes der Nut 34 gebracht werden, der die Startpunkte der Verriegelungsschenkel 38 miteinander verbindet. Etwa auf halber Strecke zwischen den Verriegelungsschenkeln 38 weist die Nut 34 eine wiederum waagerecht verlaufende Abzweigung auf, die zu einem weiteren senkrecht verlaufenden Abschnitt führt. Dieser Abschnitt erstreckt sich bis zum oberen Ende des Dornes 32 und erlaubt, den Zapfen (und damit die Hülse) aus dem Bereich des Dornes zu entfernen, so dass damit auch der Filtertopf vom Extrakt-Behälter getrennt werden kann. Die Verriegelungsschenkel 38 erstrecken sich etwa über einen Bereich von 90°, wobei sich die waagerecht verlaufende Abzweigung etwa über einen Bereich von 180° um den Dorn 32 herum erstreckt.

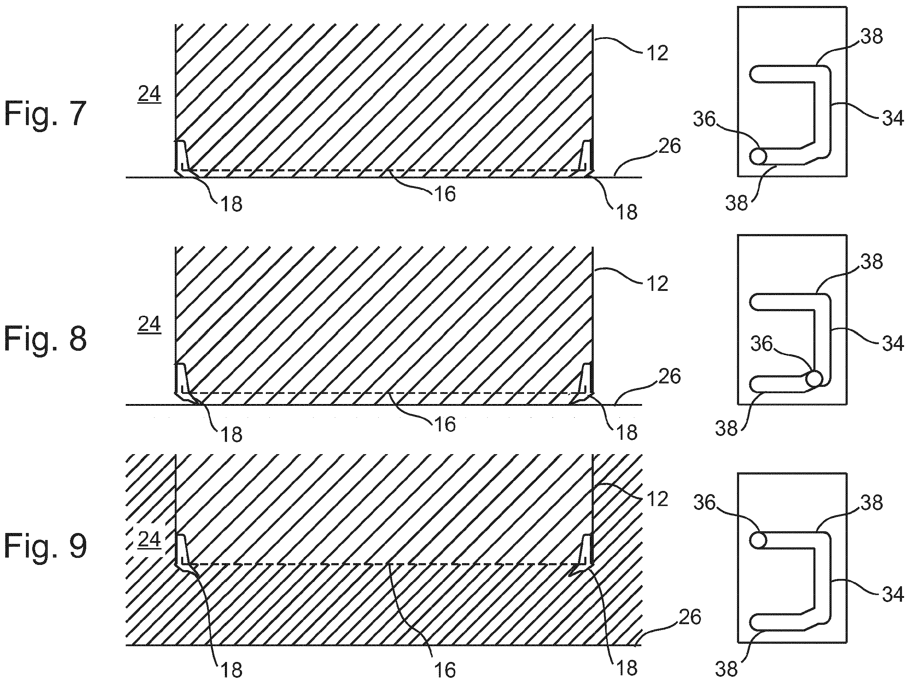

Fig. 7 zeigt eine schematische Detailansicht eines Aspektes des ersten Ausführungsbeispieles der erfindungsgemäßen Vorrichtung. In dieser Detailansicht ist ein Abstützen und Abdichten des Filtertopfes 12 über die Dichtung 18 am Boden 26 der Extrakt-Behälters näher illustriert. Am unteren Ende des Filtertopfes 12 ist eine Baugruppe mit einem Filtersieb 16 und einer das Filtersieb 16 umschließenden Dichtung 18 angebracht.

Diese Baugruppe ist so gebildet, dass die im Wesentlichen ringförmige Dichtung 18, die aus (Synthese-)Kautschuk geformt ist, das Filtersieb 16 integral aufnimmt. Eine Möglichkeit, eine solche integrale Aufnahme zu realisieren, besteht darin, die Dichtung 18 per Spritzguss herzustellen, wobei das Filtersieb 16 hierbei in die Spritzgussform mit eingelegt ist, so dass beim Formen der Dichtung 18 das dazu verwendete Material das Filtersieb 18 mit einbettet. Im vorliegenden Beispiel weist das Filtersieb 18 an seiner äußeren Peripherie einen (in der Darstellung) nach oben abgewinkelten, umlaufenden Abschnitt auf, der eine bessere Fixierung des Filtersiebs 16 im Dichtungsmaterial mit sich bringt. Da das Filtersieb 16 kleine Öffnungen aufweist, kann das Dichtungsmaterial bei der Erstellung der Dichtung 18 durch das Filtersieb 16 hindurchtreten, so dass hiermit eine innige Verbindung von Dichtung 18 und Filtersieb 16 erreicht wird.

Diese Baugruppe aus Dichtung 18 und Filtersieb 16 kann, etwa bei beschädigtem Filtersieb 16, aus dem Filtertopf 12 entfernt und durch eine neue Baugruppe ersetzt werden.

In der in Fig. 7 gezeigten Anordnung befindet sich heißes Wasser, in dem Kaffee-Mehl suspendiert ist (illustriert durch die Schraffur), im Inneren des Filtertopfes 12 und wird dort durch die Dichtung 18 im Zusammenspiel mit dem Boden 26 des Extrakt-Behälters davon abgehalten, in den Innenbereich 24 des Extrakt-Behälters zu gelangen - mit Ausnahme des Bereiches direkt unterhalb des Filtersiebes 16, der ebenfalls von der Dichtung 18 umschlossen ist.

Die Dichtung 18 ist so ausgestaltet, dass sie einerseits einen (in der Darstellung oberen) Abschnitt aufweist, der umlaufend an der Innenwandung des Filtertopfes 12 dichtend anliegt, wobei hierbei die Dichtung 18 insbesondere per Kraftschluss am Filtertopf 12 gehalten wird. Unterhalb dieses Abschnitt weist die Dichtung 18 andererseits umlaufend eine Dichtlippe auf, die sich vom oberen Abschnitt schräg nach innen erstreckt, wobei die Dichtlippe bei auf dem Boden 26 abgestützten Filtertopf 12 verformt ist, so dass eine ausreichende Dichtwirkung mit dem Boden 26 gegeben ist.

Fig. 9 zeigt eine weitere schematische Detailansicht des Aspektes aus Fig. 7 und 8. Während sich der Filtertopf 12 in der Darstellung von Fig. 7 in der ersten Position befindet und die Dichtung 18 die Suspension im Filtertopf 12 zurückhält, ist der Filtertopf 12 in der Darstellung von Fig. 9 von dieser Position nach oben wegbewegt, so dass die Dichtwirkung aufgehoben ist und Kaffee-Getränk aus dem Inneren des Filtertopfes 12 durch das Filtersieb 16 hindurch in den Innenbereich 24 des Extrakt-Behälters gelangen kann.

Fig. 8 zeigt einen Zwischenzustand zwischen der Situation, die in Fig. 7 gezeigt ist, und der Situation, die in Fig. 9 gezeigt ist. Während in Fig. 7 der Filtertopf 12 über die Dichtung 18 auf dem Boden 26 des Extrakt-Behälters abgestützt ist und die Dichtung 18 dabei eine Verformung erfährt, ist der Filtertopf 12 mit der Dichtung in Fig. 8 zwar gegenüber Fig. 7 leicht angehoben und die Dichtung 18 ist noch immer im Kontakt mit dem Boden des Extrakt-Behälters, so dass es noch zu keinen (oder zumindest keinem wesentlichen) Austreten von Kaffee-Getränk in den den Filtertopf 12 umgebenen Innenbereich 24 des Extrakt-Behälter kommt. Demgegenüber befindet in Fig. 9 der Filtertopf 12 mit der Dichtung 18 in einem Abstand vom Boden 26. Es ist klar, dass die schematische Darstellung in Fig. 9 einen Zustand zeigt, bei dem schon so viel Kaffee-Getränk durch das Filtersieb 16 hindurchgetreten ist, dass der in der Darstellung sichtbare Bereich des Innenbereichs 24 gefüllt ist.

Es kann vorgesehen sein, dass der Filtertopf 12 soweit vom Boden 26 entfernt bzw. soweit nach oben gehoben wird, dass sich dessen unteres Ende mit der Dichtung 18 und dem Filtersieb 16 oberhalb eines Niveaus des im Extrakt-Behälter befindlichen Kaffee-Getränks befindet.

Die Fig. 7 bis 9 zeigen neben der Darstellung des Filtertopfes 12 relativ zum Boden 26 jeweils im rechten Bereich noch eine Illustration, in der eine Position des Zapfens 36 in der Nut 34 entsprechend der Darstellung im linken Bereich gezeigt ist. Die Darstellung der Nut 34 ist hier gegenüber der Fig. 6 vereinfacht, da der Teil der Nut 34, die ein Entfernen des Zapfens 36 erlaubt, nicht mit dargestellt ist.

Auch bezugnehmend auf Fig. 6 befindet sich der Zapfen 36 in der in Fig. 7 illustrierten Situation am äußeren (linken) Ende des unteren Verriegelungsschenkels 38, während die Darstellung von Fig. 8 einer Position des Zapfens im Übergangsbereich von unterem Verriegelungsschenkel 38 zum senkrecht verlaufenen Abschnitt der Nut 34 entspricht. Die Figuren 7 bis 9 sind nicht maßstabsgerecht zur Darstellung von Fig. 6, so dass die Fig. 9, bei der der Zapfen am linken Ende des oberen Verriegelungsschenkels 38 angeordnet ist, ihre Entsprechung auch in einer Position des Zapfens im senkrechten Bereich der Nut (zweite Ansicht von links in Fig. 6) oder im oberen Verriegelungsschenkel 38 finden könnte.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutieren Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 10: Vorrichtung zur Bereitung eines Extraktionsgetränkes
- 12: Filtertopf
- 14: Extrakt-Behälter
- 16: Filtersieb
- 18: Dichtung
- 20: Führung, Griff
- 22: Ausgießtülle
- 24: Innenbereich
- 26: Boden
- 30: Hülse
- 32: Dorn
- 34: Nut
- 36: Zapfen
- 38: Verriegelungsschenkel
- 40: Außenkontur
- 42: Öffnung des Extrakt-Behälters
- 44: Öffnung des Filtertopfes
- 46: Deckel des Filtertopfes

## Patentansprüche

1. Vorrichtung (10) zur Bereitung eines Extraktionsgetränkes, insbesondere eines Filterkaffee-Getränkes, mit
einem Filtertopf (12) zur Aufnahme von festem Extraktionsgut, insbesondere Kaffeemehl, und flüssigem Extraktionsmittel, insbesondere Wasser, und
einem Extrakt-Behälter (14),
wobei der Filtertopf (12) in einem unteren Bereich ein Filtersieb (16) aufweist, das dazu ausgestaltet ist, Extraktionsgetränk passieren zu lassen und einen nicht vom Extraktionsgetränk aufgenommenen Feststoffanteil des Extraktionsgutes im Filtertopf (12) zurückzuhalten,
wobei der Filtertopf (12) zumindest teilweise in einem Innenraum des Extrakt-Behälters (14) angeordnet ist und relativ zum Extrakt-Behälter (14) eine erste und eine zweite Position annehmen kann,
wobei die Vorrichtung (10) ferner eine Dichtung (18) aufweist, die, wenn sich der Filtertopf (12) in der ersten Position befindet, den Filtertopf (12) und einen vorbestimmten ersten Anteil des Innenbereiches (24) des Extrakt-Behälters (14) einerseits und einen verbleibenden zweiten Anteil des Innenbereiches (24) des Extrakt-Behälters (14) andererseits gegeneinander abdichtet,
wobei sich die zweite Position oberhalb der ersten Position befindet, derart dass die Dichtwirkung der Dichtung (18) aufgehoben und ein Passieren des Extraktionsgetränkes aus dem Filtertopf (12) in den Extrakt-Behälter (14) durch das Filtersieb (16) hindurch erlaubt ist,
wobei die Vorrichtung (10) ferner eine außerhalb des Extrakt-Behälters (14) befindliche Führung (20) für eine Bewegung des Filtertopfes (12) zwischen der ersten und der zweiten Position aufweist,
wobei der Extrakt-Behälter (14) eine Ausgießtülle (22) aufweist, die ein Ausgießen von Extraktionsgetränk aus dem Extrakt-Behälter (14) unter Zurückhalten des nicht vom Extraktionsgetränk aufgenommenen Feststoffanteiles des Extraktionsgutes im Filtertopf (12) erlaubt.

2. Vorrichtung (10) zur Bereitung eines Extraktionsgetränkes nach Anspruch 1,
wobei sich der Filtertopf (12) in der zweiten Position oberhalb eines Füllhöheniveaus befindet, das sich ergibt, wenn der Extrakt-Behälter (14) mit Flüssigkeit von einem Volumen gefüllt ist, das einem Innenvolumen des Filtertopfes (12) entspricht.

3. Vorrichtung (10) zur Bereitung eines Extraktionsgetränkes nach Anspruch 1 oder 2,
wobei der Extrakt-Behälter (14) ein gegenüber dem Filtertopf (12) um einen Faktor von 1,4 größeres Innenvolumen aufweist.

4. Vorrichtung (10) zur Bereitung eines Extraktionsgetränkes nach Anspruch 3,
wobei sich der Innenbereich (24) des Extrakt-Behälters (14) nach unten aufweitet.

5. Vorrichtung (10) zur Bereitung eines Extraktionsgetränkes nach einem der vorherigen Ansprüche,
wobei sich der Filtertopf (12) in der ersten Position über die Dichtung (18) am Boden (26) des Extrakt-Behälters (14) abstützt.

6. Vorrichtung (10) zur Bereitung eines Extraktionsgetränkes nach einem der vorherigen Ansprüche,
wobei die Führung (20) für eine Arretierung des Filtertopfes (12) in der ersten und/oder in der zweiten Position ausgestaltet ist.

7. Vorrichtung (10) zur Bereitung eines Extraktionsgetränkes nach einem der vorherigen Ansprüche,
wobei sich die Führung (20) neben dem Extrakt-Behälter (14) erstreckt, wobei die Führung (20) insbesondere ausgestaltet ist, um als Griff (20) für die Vorrichtung (10) zu dienen.

8. Vorrichtung (10) zur Bereitung eines Extraktionsgetränkes nach einem der vorherigen Ansprüche,
wobei die Führung (20) eine Hülse (30) und einen innerhalb der Hülse (30) aufgenommenen Dorn (32) umfasst.

9. Vorrichtung (10) zur Bereitung eines Extraktionsgetränkes nach Anspruch 8,
wobei die Hülse (30) relativ zum Dorn (32) um eine Längsachse gedreht werden kann.

10. Vorrichtung (10) zur Bereitung eines Extraktionsgetränkes nach Anspruch 9, wobei
- der Dorn (32) wenigstens eine Nut (34) aufweist, in die ein Zapfen (36) innerhalb der Hülse (30) eingreift, und/oder
- der Dorn (32) wenigstens einen Zapfen aufweist, der in eine Nut oder einen Schlitz in der Hülse eingreift.

11. Vorrichtung (10) zur Bereitung eines Extraktionsgetränkes nach Anspruch 10,
wobei die Nut (34) bzw. der Schlitz mit einem sich vorzugsweise verjüngenden Verriegelungsschenkel (38) zur Verriegelung des Filtertopfes in einer Position ausgeführt ist, wobei der Verriegelungsschenkel (38) insbesondere für eine Verriegelung in der ersten Position mit einer Steigung versehen ist.

12. Vorrichtung (10) zur Bereitung eines Extraktionsgetränkes nach einem der vorstehenden Ansprüche,
wobei Dichtung (18) an einer Wandung des Filtertopfes (12) gehalten ist und das Filtersieb (16) trägt.

13. Vorrichtung (10) zur Bereitung eines Extraktionsgetränkes nach einem der vorstehenden Ansprüche,
wobei der Filtertopf (12) eine Außenkontur (40) aufweist und der Extrakt-Behälter (14) eine Öffnung (42) aufweist, durch die sich der Filtertopf (12) erstreckt, wobei die Außenkontur (40) und die Öffnung (42) aufeinander abgestimmt sind, so dass sie gemeinsam eine weitere Führung bilden.

## Claims

1. An apparatus (10) for preparing an extraction beverage, in particular a filter coffee beverage, comprising
a filter bowl (12) for receiving a solid extraction material, in particular ground coffee, and a liquid extraction agent, in particular water, and
an extract container (14),
wherein the filter bowl (12) comprises, in a lower region, a filter sieve (16) which is configured to allow the extraction beverage to pass through and to retain a solids portion of the extraction material which is not included in the extraction beverage in the filter bowl (12),
wherein the filter bowl (12) is arranged at least partially in an interior of the extract container (14) and can take a first and a second position relative to the extract container (14),
wherein the apparatus (10) further comprises a seal (18) which, when the filter bowl (12) is in the first position, seals the filter bowl (12) and a predetermined first portion of the inner region (24) of the extract container (14) on the one hand and a remaining second portion of the inner region (24) of the extract container (14) on the other hand against each other,
wherein the second position is located above the first position such that the sealing effect of the seal (18) is canceled and a passage of the extraction beverage from the filter bowl (12) into the extract container (14) through the filter sieve (16) is allowed,
wherein the apparatus (10) further comprises a guide (20) located outside the extract container (14) for moving the filter bowl (12) between the first and the second position,
wherein the extract container (14) comprises a pouring spout (22) which allows pouring of extraction beverage from the extract container (14) while retaining the solids part of the extraction material not included in the extraction beverage in the filter bowl (12).

2. The apparatus (10) for preparing an extraction beverage according to claim 1,
wherein the filter bowl (12) is located in the second position above a filling level which results when the extract container (14) is filled with liquid of a volume which corresponds to an internal volume of the filter bowl (12).

3. The apparatus (10) for preparing an extraction beverage according to claim 1 or 2,
wherein the extract container (14) has an internal volume which is larger than that of the filter bowl (12) by a factor of 1.4.

4. The apparatus (10) for preparing an extraction beverage according to claim 3,
wherein the inner region (24) of the extract container (14) widens downwards.

5. The apparatus (10) for preparing an extraction beverage according to any one of the preceding claims,
wherein, in the first position, the filter bowl (12) is supported on a bottom (26) of the extract container (14) via the seal (18).

6. The apparatus (10) for preparing an extraction beverage according to any one of the preceding claims,
wherein the guide (20) is configured to lock the filter bowl (12) in the first and/or in the second position.

7. The apparatus (10) for preparing an extraction beverage according to any one of the preceding claims,
wherein the guide (20) extends next to the extract container (14), wherein the guide (20) is particularly configured to serve as a handle (20) for the apparatus (10).

8. The apparatus (10) for preparing an extraction beverage according to any one of the preceding claims,
wherein the guide (20) includes a sleeve (30) and a mandrel (32) received within the sleeve (30).

9. The apparatus (10) for preparing an extraction beverage according to claim 8,
wherein the sleeve (30) can be rotated relative to the mandrel (32) about a longitudinal axis.

10. The apparatus (10) for preparing an extraction beverage according to claim 9,
wherein
- the mandrel (32) comprises at least one groove (34) in which a pin (36) engages within the sleeve (30), and/or
- the mandrel (32) comprises at least one pin which engages in a groove or a slot in the sleeve.

11. The apparatus (10) for preparing an extraction beverage according to claim 10,
wherein the groove (34) or the slot is designed with a preferably tapering locking leg (38) for locking the filter bowl in one position, wherein the locking leg (38) is provided with a slope, in particular for locking in the first position.

12. The apparatus (10) for preparing an extraction beverage according to any one of the preceding claims,
wherein the seal (18) is held on a wall of the filter bowl (12) and carries the filter sieve (16).

13. The apparatus (10) for preparing an extraction beverage according to any one of the preceding claims,
wherein the filter bowl (12) comprises an outer contour (40) and the extract container (14) comprises an opening (42) through which the filter bowl (12) extends, wherein the outer contour (40) and the opening (42) are matched to each other such that they form a further guide together.

## Revendications

1. Appareil (10) de préparation d'une boisson d'extraction, en particulier d'une boisson de café filtre, comprenant
un pot filtrant (12) destiné à recevoir une matière à extraire solide, en particulier du café moulu, et un agent d'extraction liquide, en particulier de l'eau, et
un récipient d'extrait (14),
le pot filtrant (12) présentant, dans une région inférieure, un tamis filtrant (16) conçu pour laisser passer la boisson d'extraction et pour retenir, dans le pot filtrant (12), une part de matières solides de la matière à extraire non absorbée par la boisson d'extraction,
le pot filtrant (12) étant disposé au moins partiellement dans un espace intérieur du récipient d'extrait (14) et pouvant occuper une première et une seconde position par rapport au récipient d'extrait (14),
l'appareil (10) comprenant en outre un joint (18) qui, lorsque le pot filtrant (12) se trouve dans la première position, étanchéifie l'un par rapport à l'autre le pot filtrant (12) et une première partie prédéterminée de la zone intérieure (24) du récipient d'extrait (14), d'une part, et une seconde partie restante de la zone intérieure (24) du récipient d'extrait (14), d'autre part,
la seconde position se trouvant au-dessus de la première position, de telle sorte que l'effet d'étanchéité du joint (18) est supprimé et qu'un passage de la boisson d'extraction du pot filtrant (12) vers le récipient d'extrait (14) à travers le tamis filtrant (16) est autorisé,
l'appareil (10) comprenant en outre un guidage (20) situé à l'extérieur du récipient d'extrait (14) pour un déplacement du pot filtrant (12) entre la première et la seconde position,
le récipient d'extrait (14) comprenant un bec verseur (22) qui permet de verser la boisson d'extraction hors du récipient d'extrait (14) tout en retenant, dans le pot filtrant (12), la part de matières solides de la matière à extraire non absorbée par la boisson d'extraction.

2. Appareil (10) de préparation d'une boisson d'extraction selon la revendication 1, le pot filtrant (12) se trouvant, dans la seconde position, au-dessus d'un niveau de remplissage qui résulte du remplissage du récipient d'extrait (14) avec un volume de liquide correspondant à un volume intérieur du pot filtrant (12).

3. Appareil (10) de préparation d'une boisson d'extraction selon la revendication 1 ou 2, le récipient d'extrait (14) présentant un volume intérieur supérieur à celui du pot filtrant (12) d'un facteur de 1,4.

4. Appareil (10) de préparation d'une boisson d'extraction selon la revendication 3, la zone intérieure (24) du récipient d'extrait (14) s'évasant vers le bas.

5. Appareil (10) de préparation d'une boisson d'extraction selon l'une des revendications précédentes, le pot filtrant (12) s'appuyant, dans la première position, par l'intermédiaire du joint (18) sur le fond (26) du récipient d'extrait (14).

6. Appareil (10) de préparation d'une boisson d'extraction selon l'une des revendications précédentes, le guidage (20) étant conçu pour un verrouillage du pot filtrant (12) dans la première et/ou dans la seconde position.

7. Appareil (10) de préparation d'une boisson d'extraction selon l'une des revendications précédentes, le guidage (20) s'étendant à côté du récipient d'extrait (14), le guidage (20) étant en particulier conçu pour servir de poignée (20) pour l'appareil (10).

8. Appareil (10) de préparation d'une boisson d'extraction selon l'une des revendications précédentes, le guidage (20) comprenant une douille (30) et un mandrin (32) reçu à l'intérieur de la douille (30).

9. Appareil (10) de préparation d'une boisson d'extraction selon la revendication 8, la douille (30) pouvant être tournée par rapport au mandrin (32) autour d'un axe longitudinal.

10. Appareil (10) pour la préparation d'une boisson d'extraction selon la revendication 9, dans lequel
- le mandrin (32) présente au moins une rainure (34) dans laquelle s'engage un tenon (36) situé à l'intérieur de la douille (30), et/ou
- le mandrin (32) présente au moins un tenon qui s'engage dans une rainure ou une fente de la douille.

11. Appareil (10) de préparation d'une boisson d'extraction selon la revendication 10, la rainure (34) ou la fente étant réalisée avec une branche de verrouillage (38) de préférence effilée pour le verrouillage du pot filtrant dans une position, la branche de verrouillage (38) étant munie d'une pente, notamment pour un verrouillage dans la première position.

12. Appareil (10) de préparation d'une boisson d'extraction selon l'une des revendications précédentes, le joint (18) étant maintenu sur une paroi du pot filtrant (12) et portant le tamis filtrant (16).

13. Appareil (10) de préparation d'une boisson d'extraction selon l'une des revendications précédentes, le pot filtrant (12) présentant un contour extérieur (40) et le récipient d'extrait (14) présentant une ouverture (42) à travers laquelle s'étend le pot filtrant (12), le contour extérieur (40) et l'ouverture (42) étant adaptés l'un à l'autre de manière à former ensemble un guidage supplémentaire.
